(19) Europäisches Patentamt
European Patent Office
Office européen des brevets

(11) **EP 4 715 001 A1**

(12) **EUROPEAN PATENT APPLICATION**
published in accordance with Art. 153(4) EPC

(43) Date of publication:
**25.03.2026 Bulletin 2026/13**

(21) Application number: **24807193.8**

(22) Date of filing: **13.05.2024**

(51) International Patent Classification (IPC):
*C08J 5/04* (2006.01)       *B29C 43/34* (2006.01)
*B29C 70/42* (2006.01)      *C08K 7/14* (2006.01)
*C08L 23/10* (2006.01)      *H01M 50/204* (2021.01)
*H01M 50/222* (2021.01)     *H01M 50/227* (2021.01)
*H01M 50/229* (2021.01)     *H01M 50/249* (2021.01)

(52) Cooperative Patent Classification (CPC):
**B29C 43/34; B29C 70/42; C08J 5/04; C08K 7/14;
C08L 23/10; H01M 50/204; H01M 50/222;
H01M 50/227; H01M 50/229; H01M 50/249**

(86) International application number:
**PCT/JP2024/017687**

(87) International publication number:
**WO 2024/237241 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.05.2023 JP 2023079982**

(71) Applicant: **TEIJIN LIMITED
Kita-ku,
Osaka-shi,
Osaka 530-0005 (JP)**

(72) Inventors:
• **ODA Tomohiro**
  **Osaka-shi, Osaka 530-0005 (JP)**
• **KONAGAI Yuhei**
  **Osaka-shi, Osaka 530-0005 (JP)**
• **YOKOMIZO Hodaka**
  **Osaka-shi, Osaka 530-0005 (JP)**

(74) Representative: **Hoffmann Eitle
Patent- und Rechtsanwälte PartmbB
Arabellastraße 30
81925 München (DE)**

(54) **HORIZONTAL MEMBER FOR AUTOMOBILES AND METHOD FOR MANUFACTURING SAME**

(57)     The present invention provides a horizontal member for automobiles, which can be easily formed and has a small resin drip after a combustion test. A horizontal member for automobiles, including: a reinforcing fiber having a weight average fiber length of 5 mm or more and 100 mm or less, a resin, and a flame retardant, in which the horizontal member for automobiles contains the flame retardant in an amount of 1 part by mass or more and 50 parts by mass or less with respect to 100 parts by mass of the resin, and
the following (a) and (b) are satisfied:
(a) a tensile strength retention ratio represented by the formula (1) is 0.04% or more,

Tensile strength retention ratio (%) = (tensile strength B after combustion ÷ tensile strength A before combustion) × 100        (1);

and
(b) in a tensile test of a test piece having a width of 25 mm after subjected to the combustion test, a workload per basis weight is $0.5 \times 10^{-3}$ or more and $100 \times 10^{-3}$ [(N·mm)/(g/m²)] or less, and the maximum load per basis weight is $1.1 \times 10^{-3}$ [N/(g/m²)] or more.

EP 4 715 001 A1

# FIG. 1

**Description**

TECHNICAL FIELD

The present invention relates to a horizontal member for automobiles, including a reinforcing fiber having a weight average fiber length of 5 mm or more and 100 mm or less, a resin, and a flame retardant, and a method for producing the same.

BACKGROUND ART

A molding material using a reinforcing fiber as a reinforcing material has a high tensile strength and a high tensile elastic modulus, a small linear expansion coefficient, and excellent dimensional stability, and further excellent heat resistance, chemical resistance, fatigue resistance, wear resistance, and the like, and thus a molding material using a reinforcing fiber is widely applied to automobiles, sports and leisure, aerospace, general industrial applications, and the like.

Patent Literature 1 describes a stampable sheet and a stampable sheet molded product by a papermaking method excellent in flame retardancy.

Patent Literatures 2 and 3 describe flame-retardant resin compositions using a needle-punched swirl-like mat or sheet of a continuous glass fiber.

Patent Literature 4 describes a self-extinguishing resin molded body obtained from a resin composition containing a phosphorus-based flame retardant and a glass fiber in a polyolefin-based resin.

Patent Literature 5 describes a carbon fiber composite material in which a carbon fiber sheet having $1 \times 10^{-3}$ to $30 \times 10^{-3}$ [(N·mm)/(g/m$^2$)] in a workload per basis weight in a tensile test of a test piece having a width of 25 mm is used as a reinforcing material, and a thermoplastic resin is used as a matrix resin.

CITATION LIST

PATENT LITERATURE

Patent Literature 1:JPH11-49869A
Patent Literature 2:JPS63-183845A
Patent Literature 3:WO2022/220303A
Patent Literature 4:WO2020/071420A
Patent Literature 5:WO2013/179891A

SUMMARY OF INVENTION

TECHNICAL PROBLEM

However, in the invention described in Patent Literature 1, the papermaking method is used for production, and thus the spring back at the time of molding becomes too large and the moldability is poor. In addition, no study has been made in the case of using as a horizontal member for automobiles. Further problems of the invention described in Patent Literature 1 include:

(1) the additive amount of the flame retardant is too large, and thus the moldability deteriorates, and the production cost increases;
(2) a large amount of metal hydrate is also included as the flame retardant, the specific gravity of the obtained molded body becomes too large;
(3) in the case of using a halogen-based flame retardant as the flame retardant, there is a harmful concern such as generation of phosphine; and
(4) in the case of a horizontal member for automobiles, it is necessary to prevent sagging of the member during combustion (may be referred to as resin dripping), and in particular, when the size of the horizontal member for automobiles is large, this problem becomes remarkable.

In the inventions described in Patent Documents 2 and 3, there are problems that, a swirl-like mat or sheet of a continuous glass fiber is needle-punched, and thus surface fluff is likely to occur, fluidity is low and moldability deteriorates, and when a metal hydrate is used, the specific gravity of the obtained molded body increases.

In the invention described in Patent Literature 4, the fiber length is too short since it is a molded body mainly using injection molding. Therefore, entanglement between fibers is small, and a large resin drip occurs when a molded body is subjected to a combustion test. When a molded body having a large resin drip is used for a battery cover, for example, there is a risk that the battery may explode.

In the invention described in Patent Literature 5, the value of the workload is too large. Therefore, the spring back is too large and the moldability is extremely deteriorated, and the flame retardancy as a horizontal member for automobiles has not been studied at all.

SOLUTION TO PROBLEM

In order to solve the above problems, the present invention provides the following means.

1. A horizontal member for automobiles, including:

a reinforcing fiber having a weight average fiber length of 5 mm or more and 100 mm or less;
a resin; and
a flame retardant,
in which the horizontal member for automobiles contains the flame retardant in an amount of 1 part by mass or more and 50 parts by mass or less with respect to 100 parts by mass of the resin, and the horizontal member for automobiles satisfies the following (a) to (b):

(a) a tensile strength retention ratio represented by a formula (1) is more than 0.03%, Tensile strength retention ratio (%) = (tensile strength B after combustion ÷ tensile strength A before combustion) × 100

(b) in a tensile test of a test piece having a width of 25 mm after a combustion test, a workload per basis weight is $0.5 \times 10^{-3}$ [(N·mm)/(g/m²)] or more and $100 \times 10^{-3}$ [(N·mm)/(g/m²)] or less, and the maximum load per basis weight is $1.1 \times 10^{-3}$ [N/(g/m²)] or more.

2. The horizontal member for automobiles according to the item 1, in which in the tensile test of the test piece having the width of 25 mm after subjected to the combustion test, the horizontal member has the maximum load per basis weight in a strain range of more than 0% and less than 2%.

3. The horizontal member for automobiles according to the item 1 or 2, in which the horizontal member for automobiles satisfies the following (c):

(c) in the tensile test of the test piece having the width of 25 mm after subjected to the combustion test, an average change rate of a load [N/(g/m²)] at a strain of 0.1% to 0.2% is in a range of $0.1 \times 10^{-3}$ or more and less than $100 \times 10^{-3}$.

4. The horizontal member for automobiles according to the item 3, in which the horizontal member for automobiles satisfies the following (d):

(d) in the tensile test of the test piece having the width of 25 mm after subjected to the combustion test, an average change rate of a load [N/(g/m²)] at a strain of 0.5% to 3.0% is in a range of $-1.0 \times 10^{-3}$ [N/(g/m²)] or more and $-0.01 \times 10^{-3}$ [N/(g/m²)] or less.

5. The horizontal member for automobiles according to any one of the items 1 to 4, in which the resin is a thermoplastic resin.

6. The horizontal member for automobiles according to any one of the items 1 to 5, in which the resin is a polypropylene resin.

7. The horizontal member for automobiles according to any one of the items 1 to 6, in which the reinforcing fiber is a glass fiber.

8. The horizontal member for automobiles according to any one of the items 1 to 7, in which the horizontal member for automobiles is a battery cover or a battery bottom protection cover.

9. The horizontal member for automobiles according to any one of the items 1 to 8, in which the resin is a thermoplastic resin, and a spring back rate of the horizontal member for automobiles is 1.2 or more and 8.0 or less.

10. A method for producing the horizontal member for automobiles according to any one of the items 1 to 9 by cold pressing a molding material including a reinforcing fiber and a thermoplastic resin, in which a spring back rate of the molding material is 1.2 or more and 8.0 or less.

11. The method for producing a horizontal member for automobiles according to the item 10, in which the reinforcing fiber is a glass fiber, and

The molding material is produced by mixing a glass fiber GFs of a single end roving and a glass fiber GFm of a multi-end roving at a volume ratio of GFm:GFs of 90:10 to 50:50.

ADVANTAGEOUS EFFECTS OF INVENTION

In the horizontal member for automobiles according to the present invention, the following (a) and (b) are satisfied, and thus not only the moldability of the horizontal member for automobiles is excellent, but also the resin drip after the combustion test is small.

(a) The tensile strength retention ratio represented by the formula (1) is 3% or more.

Tensile strength retention ratio (%) = (tensile strength B after combustion ÷ tensile strength A before combustion) × 100

(b) The workload per basis weight in the tensile test of the test piece having the width of 25 mm after subjected to the combustion test is $0.5 \times 10^{-3}$ or more and $100 \times 10^{-3}$ or less $[(N \cdot mm)/(g/m^2)]$.

BRIEF DESCRIPTION OF DRAWINGS

FIG. 1 is a schematic view showing a state in which a test piece is subjected to a combustion test.
FIG. 2 is a schematic view showing an example of a vehicle structure including a battery bottom protection cover under a battery box, which is an example of a case where the horizontal member of the present invention is used for a battery cover or a battery tray.
FIG. 3 is an example of a graph showing a load-strain curve in a tensile test of the test piece of Example 1.

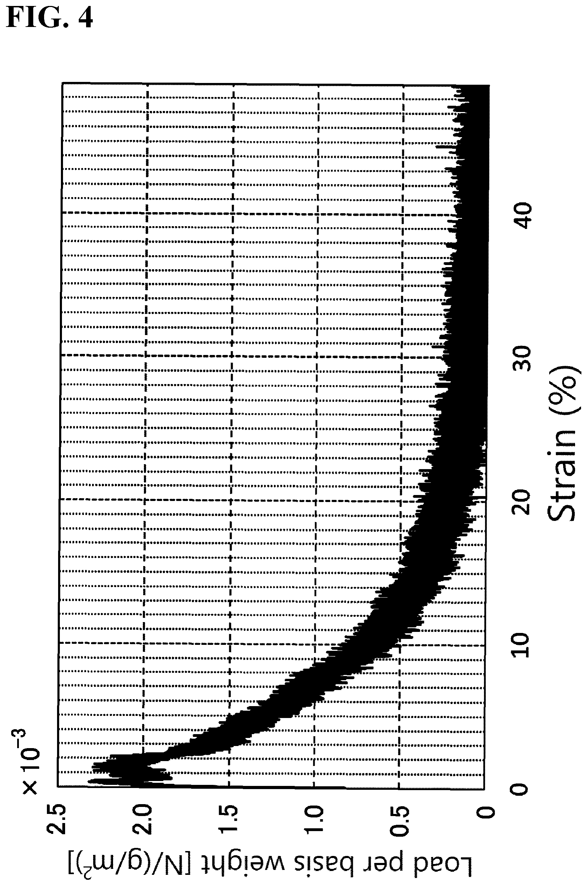

FIG. 4 is an example of a graph showing a load-strain curve in a tensile test of Example 5.

DESCRIPTION OF EMBODIMENTS

Hereinafter, the present invention will be described in detail.

[Reinforcing fiber]

In this description, the reinforcing fiber is preferably at least one selected from the group consisting of a carbon fiber, an aramid fiber, and a glass fiber. More preferably, the reinforcing fiber is a carbon fiber or a glass fiber.

[Carbon fiber]

1. Carbon fiber in general

As carbon fiber for use in the present invention, polyacrylonitrile (PAN)-based carbon fiber, petroleum/coal pitch-based carbon fiber, rayon-based carbon fiber, cellulose-based carbon fiber, lignin-based carbon fiber, phenol-based carbon fiber, and the like are generally known, and in the present invention, any of these carbon fibers can be preferably used. Among them, the polyacrylonitrile (PAN)-based carbon fiber is preferably used in the present invention because of excellent tensile strength. Carbon fiber "Tenax" (registered trademark) STS40-24KS (average fiber diameter: 7 μm) manufactured by Teijin Limited can be used as the PAN-based carbon fiber, for example.

2. Sizing agent for carbon fiber

The carbon fiber used in the present invention may have a sizing agent attached to a surface thereof. When the carbon fiber having a sizing agent attached is used, the type of the sizing agent can be appropriately selected according to the type of the carbon fiber and the type of the resin used in the horizontal member for automobiles, and is not particularly limited.

[Glass fiber]

A case in which the reinforcing fiber used in the present invention is a glass fiber will be described.

1. Glass fiber in general

The glass fibers used in the present invention may be any glass fibers commonly referred to as glass fibers. The glass composition such as A glass, C glass, and E glass is not particularly limited, and the glass fibers may contain a component such as $TiO_2$, $SO_3$, and $P_2O_5$. As the glass fiber, for example, RV P 204 to 4800 TEX manufactured by Owens Corning can be used.

2. Sizing agent for glass fibers

The glass fibers used in the present invention may have a sizing agent attached to a surface thereof. When glass fibers having a sizing agent attached are used, the type of the sizing agent can be appropriately selected according to the type of the glass fibers and the type of the resin, and is not particularly limited. The glass fibers that are treated previously with a conventionally known coupling agent, such as an organosilane-based compound, an organic titanium-based compound, an organoborane-based compound, and an epoxy-based compound, can be preferably used.

3. In the fabrication of the molding material of the present invention, it is preferable to prepare a molding material by mixing the glass fiber GFs of the single end roving and the glass fiber GFm of the multi-end roving at a volume ratio of GFm:GFs of 50:50 to 90:10. When the ratio of GFm is 50% or more, the workload can be easily set to the upper limit value or less. When GFm is 90% or less, the workload can be set to the lower limit or less.

The multi-end roving is a roving in which terminal positions of glass strands are not aligned. A plurality of (multiple) terminals are present in the glass fiber of the multi-end roving. Single end roving refers to roving in a state where one end position of a glass strand is aligned. The end of the glass fiber of the single end roving is one (single).

[Dispersion in in-plane direction]

The reinforcing fibers included in the horizontal member for automobiles are preferably dispersed in an in-plane direction. The horizontal member for automobiles of the present invention is preferably produced by cold-pressing a molding material including reinforcing fibers and a thermoplastic resin. In this case, the reinforcing fibers included in the molding material are more preferably dispersed in the in-plane direction.

Dispersing the reinforcing fibers in the in-plane direction means dispersing with the fiber axes of the reinforcing fibers being in the in-plane direction. The angle between the fiber axes of the reinforcing fibers and the in-plane direction is preferably 45° or less.

1. In-plane direction

The molding material for producing the horizontal member for automobiles is preferably a plate-shaped material. The in-plane direction is an indefinite direction of a parallel surface orthogonal to the plate thickness direction of the molding material.

2. Random distribution in two-dimensional direction

The reinforcing fibers are preferably randomly dispersed in the two-dimensional direction in the in-plane direction. When press molding is performed without flowing the molding material (in the case of non-flow molding), the form of the reinforcing fiber is substantially maintained before and after molding. In the case of non-flow molding, it is preferable that by orienting the reinforcing fibers included in the molding material in a two-dimensional random manner, reinforcing fibers included in a horizontal member for automobiles (molded body) formed by molding the molding material are similarly dispersed in the two-dimensional random manner in an in-plane direction.

Herein, the "dispersed in a two-dimensional random manner" refers to a state in which the reinforcing fibers are not oriented in a specific direction such as one direction in the in-plane directions of the molded body, but are oriented in a disordered manner, and are arranged in the sheet surface without exhibiting a specific directivity as a whole. The molding material (or molded body) obtained by using the discontinuous fibers dispersed in a two-dimensional random manner is a substantially isotropic molding material (or molded body) having no in-plane anisotropy.

A degree of the two-dimensional random orientation is evaluated by determining a ratio of tensile elastic modulus in two directions orthogonal to each other. When a ratio ($E\delta$) obtained by dividing a larger value of the measured values of the tensile elastic modulus by a smaller value is 5 or less, more preferably 2 or less, and still more preferably 1.5 or less in any direction of the molding material (or the molded body) and a direction orthogonal thereto, it can be evaluated that the reinforcing fibers are dispersed in a two-dimensional random manner. When the horizontal member for automobiles includes a curved surface, the evaluation method of the two-dimensional random dispersion in the in-plane direction may include heating the horizontal member for automobiles to a softening temperature or more and returning the horizontal member for automobiles to a flat plate shape and then solidifying the horizontal member for automobiles. After that, the test piece is cut out, the tensile elastic modulus is obtained, and then a random dispersion state in the two-dimensional directions can be confirmed.

[Fiber length of reinforcing fiber]

The horizontal member for automobiles according to the present invention has a weight average fiber length of 5 mm or more and 100 mm or less.

The weight average fiber length of the molding material and the horizontal member for automobiles (molded body) does not change before and after molding, and thus the weight average fiber length Lw of the reinforcing fibers included in the molding material can be found by examining the weight average fiber length of the reinforcing fibers included in the horizontal member for automobiles (molded body).

The lower limit of the weight average fiber length of the reinforcing fibers is preferably 7 mm or more, and more preferably 10 mm or more. In contrast, the upper limit of the weight average fiber length is preferably 80 mm or less, and more preferably 70 mm or less. When the weight average fiber length is 5 mm or more, the mechanical strength of the obtained fiber-reinforced resin member is unlikely to decrease, which is preferable. When the weight average fiber length is 100 mm or less, the fluidity of the material is less likely to be decreased in producing by press-molding the molding material, and a fiber-reinforced resin member having a desired shape is easily fabricated.

The preferable range of the weight average fiber length of the reinforcing fibers is 5 mm or more and 80 mm or less, and more preferably 10 mm or more and 60 mm or less.

[Number average fiber length Ln and weight average fiber length Lw]

The number average fiber length Ln and the weight average fiber length Lw are determined by the following formulas (X) and (Y), where the fiber length of each of the reinforcing fibers is represented by Li. The unit of the number average fiber length Ln and the weight average fiber length Lw is mm.

$$[\text{Mathematical formula 1}]$$

$$Ln = \sum_{i=1}^{I} Li/I \cdots (\text{X})$$

$$Lw = (\sum_{i=1}^{I} Li^2)/(\sum_{i=1}^{I} Li) \cdots (\text{Y})$$

In the formula, "I" represents the number of measured reinforcing fibers.

When the fiber length is constant, the number average fiber length and the weight average fiber length have the same value. The reinforcing fibers can be extracted from the door inner panel, for example, by heat-treating the door inner panel at 500°C for about 1 hour and removing the resin in a furnace.

The average fiber length can be determined, for example, by measuring the fiber lengths of 100 fibers randomly extracted from the door inner panel up to a unit of 1 mm using a caliper or the like based on the formula (X).

When short fibers that cannot be measured with a caliper were contained, the resin was removed, and then the obtained reinforcing fibers are put into water containing a surfactant and sufficiently stirred by ultrasonic vibration. The stirred dispersion is randomly taken with a measuring spoon to provide a sample for evaluation, and the lengths of 3000 fibers may be measured by an image analyzer Luzex AP manufactured by NIRECO CORPORATION. Using the measured values of the fiber lengths, the number average fiber length Ln and the weight average fiber length Lw can be determined similarly as in the above formulas (X) and (Y).

[Volume ratio of reinforcing fibers]

The reinforcing fiber volume fraction (Vf) of the reinforcing fibers included in the horizontal member for automobiles can be obtained by the following formula (3).

$$\text{Reinforcing fiber volume fraction (Vf)} = 100 \times \text{reinforcing fiber volume}/(\text{reinforcing fiber volume} + \text{resin volume}) \tag{3}$$

The reinforcing fiber volume fraction is not particularly limited, but the reinforcing fiber volume fraction (Vf) is preferably 10 vol% to 60 vol%, more preferably 20 vol% to 50 vol%, and still more preferably 25 vol% to 45 vol%.

[Analysis of reinforcing fiber volume fraction (Vf)]

The analysis of the reinforcing fiber volume fraction is not limited, but it is preferable to measure the volume fraction as follows.
A sample is cut out from the horizontal member for automobiles, the resin is removed by burning at 500°C for 1 hour in a furnace, the mass of the sample is weighed before and after the treatment, and the masses of the reinforcing fibers and the resin are calculated. Then, the volume of the reinforcing fiber is calculated by dividing the mass of the reinforcing fiber by the density of the reinforcing fiber, and the volume of the resin is calculated by dividing the mass of the resin by the density of the resin. Then, the volume fraction Vf of the reinforcing fiber to the total volume of the reinforcing fiber and the resin is calculated.

[Resin]

The resin included in the horizontal member for automobiles may be thermosetting or thermoplastic.

1. Thermoplastic resin

1.1. Overview

When the resin used is a thermoplastic resin, the type thereof is not particularly limited, and one having a desired softening point or melting point can be appropriately selected and used. As the thermoplastic resin, a resin having a softening point in the range of 80°C to 350°C, preferably 100°C to 350°C, and more preferably 180°C to 350°C is typically used, but the thermoplastic resin is not limited thereto.
Examples of the thermoplastic resin include a polyolefin resin, a polystyrene resin, a polyamide resin, a polyester resin, a polyacetal resin (polyoxy methylene resin), a polycarbonate resin, a (meth)acrylic resin, a polyarylate resin, a polyphenylene ether resin, a polyimide resin, a polyether nitrile resin, a phenoxy resin, a polyphenylene sulfide resin, a polysulfone resin, a polyketone resin, a polyetherketone resin, a thermoplastic urethane resin fluorine-based resin, and a thermoplastic polybenzimidazole resin.
The thermoplastic resin used in the door inner panel of the present invention may be only one type or two or more types. Example of a mode in which two or more types of thermoplastic resins are used in combination include, but not limited to, a mode in which thermoplastic resins having different softening points or melting points from each other are used in combination, and a mode in which thermoplastic resins having different average molecular weights from each other are used in combination.
When the thermoplastic resin is used, a polyolefin resin is preferably used, and a polypropylene resin is more preferably used.

2 Thermosetting resin

The resin of the present invention may be a thermosetting resin. In this case, a sheet molding compound (may be referred to as SMC) using reinforcing fibers may be used as the molding material. Due to its high moldability, the sheet molding compound can be easily molded into complex shapes. The sheet molding compounds have higher fluidity and formability than continuous fibers, and ribs and bosses can be easily fabricated.

[Flame retardant]

1. The horizontal member for automobiles of the present invention contains a flame retardant. The flame retardant is not particularly limited, and examples thereof include a phosphorus-based flame retardant, a bromine-based flame retardant, and an antimony-based flame retardant. Among these, the phosphorus-based flame retardant is preferable from the viewpoint of improving flame shielding properties. In addition, in the classification focusing on the action mechanism of the flame retardant, the flame retardant is preferably an intumescent-based flame retardant from the viewpoint of improving the flame shielding properties.

2. Phosphorus-based flame retardant

The phosphorus-based flame retardant is a phosphorus compound, that is, a compound including a phosphorus atom in the molecule. The phosphorus-based flame retardant exerts a flame retardant effect by forming a char during combustion of the resin composition.

The phosphorus-based flame retardant may be a known one, and examples thereof include (poly)phosphate and (poly)phosphate ester. Herein, the "(poly)phosphate" indicates a phosphate or a polyphosphate, and the "(poly)phosphate ester" indicates a phosphate ester or a polyphosphate ester. The phosphorus-based flame retardant is preferably solid at 80°C.

The phosphorus-based flame retardant is preferably a (poly)phosphate from the viewpoint of flame retardancy. Examples of the (poly)phosphate include ammonium polyphosphate, melamine polyphosphate, piperazine polyphosphate, piperazine orthophosphate, melamine pyrophosphate, piperazine pyrophosphate, melamine orthophosphate, calcium phosphate, and magnesium phosphate.

In addition, in the above examples, compounds in which melamine or piperazine is replaced with other nitrogen compounds can be used in the same manner. Examples of other nitrogen compounds include N,N,N',N'-tetramethyldiaminomethane, ethylenediamine, N,N'-dimethylethylenediamine, N,N'-diethylethylenediamine, N,N-dimethylethylenediamine, N,N-diethylethylenediamine, N,N,N',N'-tetramethylethylenediamine, N,N,N',N'-diethylethylenediamine, 1,2-propanediamine, 1,3-propanediamine, tetramethylenediamine, pentamethylenediamine, hexamethylenediamine, 1,7-diaminoheptane, 1,8-diaminooctane, 1,9-diaminononane, 1,10-diaminodecane, trans-2,5-dimethylpiperazine, 1,4-bis(2-aminoethyl)piperazine, 1,4-bis(3-aminopropyl)piperazine, acetoguanamine, benzoguanamine, acrylguanamine, 2,4-diamino-6-nonyl-1,3,5-triazine, 2,4-diamino-6-hydroxy-1,3,5-triazine, 2-amino-4,6-dihydroxy-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1 , 3,5-triazine, 2-amino-4,6-dimercapto-1,3,5-triazine, ammeline, benzguanamine, acetoguanamine, phthalodiguanamine, melamine cyanurate, melamine pyrophosphate, butylenediguanamine, norbornenediguanamine, methylenediguanamine, ethylenedimelamine, trimethylenedimelamine, tetramethylenedimelamine, hexamethylenedimelamine, and 1,3-hexylenedimelamine. These (poly)phosphates may be used singly or in combination of two or more thereof.

Examples of commercially available phosphorus-based flame retardants include ADK STAB (registered trademark) FP-2100J, FP-2200, and FP-2500S (manufactured by ADEKA Corporation), ADK STAB FP-2100 JC, and Exoit (registered trademark) AP 462 and Exoit OP1230, manufactured by Clariant.

3. Intumescent-based flame retardant

The intumescent-based flame retardant is a flame retardant that suppresses combustion of a material by forming a surface expansion layer (intumescent) that prevents radiant heat from a combustion source or diffusion of combustion gas, smoke, or the like from a combustion object to the outside.

The intumescent-based flame retardant forms a surface expansion layer (intumescent) that is a foamed char during combustion of the resin composition. Formation of the surface expansion layer suppresses diffusion and heat transfer of the decomposition product, and excellent flame retardancy is exhibited. Examples of the intumescent-based flame retardant include salts of (poly)phosphoric acid and a nitrogen compound described above, and specific examples thereof include ammonium salts and amine salts of (poly)phosphoric acid.

4. Bromine-based flame retardant

Examples of the bromine-based flame retardants include decabromodiphenyl ether, tetrabromobisphenol A, tetrabromobisphenol S, 1,2-bis(2',3',4',5',6'-pentabromophenyl)ethane, 1,2-bis(2,4,6-tribromophenoxy)ethane, 2,4,6-tris(2,4,6-tribromophenoxy)-1,3,5-triazine, 2,6-dibromophenol, 2,4-dibromophenol, brominated polystyrene, ethylene bistetrabromophthalimide, hexabromocyclododecane, hexabromobenzene, pentabromobenzyl acrylate, 2,2-bis[4'(2",3"-dibromopropoxy)-3',5'-dibromophenyl] -propane, bis[3,5-dibromo-4-(2,3-dibromopropoxy) phenyl]sulfone, and tris(2,3-dibromopropyl)isocyanurate.

5. Antimony-based flame retardant

Examples of the antimony-based flame retardant include antimony trioxide, antimony tetraoxide, antimony pentoxide, sodium pyroantimonate, antimony trichloride, antimony trisulfide, antimony oxychloride, antimony dichloride perchloropentane, and potassium antimonate, and antimony trioxide and antimony pentoxide are particularly preferable.

[Content of flame retardant]

The content of the flame retardant in the horizontal member for automobiles according to the present invention is 1 part by mass or more and 50 parts by mass or less with respect to 100 parts by mass of the resin. The content of the flame retardant is preferably 1 part by mass or more and 30 parts by mass or less, more preferably 5 parts by mass or more and 25 parts by mass or less. When the content is 1 part by mass or more, favorable flame retardancy can be imparted to the horizontal member for automobiles, and favorable flame shielding properties can be obtained. In contrast, when the content of the flame retardant is 50 parts by mass or less, the moldability becomes more favorable.

[Dispersant]

1. The dispersant is not particularly limited as long as the flame retardant can be dispersed in the resin, but a polymer dispersant can be suitably used from the viewpoint of compatibility with the resin. Preferably, a dispersant that enables the flame retardant to be dispersed in polypropylene resin can be used. As the polymer dispersant, a polymer dispersant having a functional group is preferable, and a polymer dispersant having a functional group such as a carboxyl group, a phosphate group, a sulfonic acid group, a primary, secondary, or tertiary amino group, a quaternary ammonium salt group, a group derived from a nitrogen-containing heterocyclic ring such as pyridine, pyrimidine, or pyrazine is preferable from the viewpoint of dispersion stability.

In the present invention, a polymer dispersant having a carboxyl group is preferable, and particularly, when a phosphorus-based flame retardant suitable as a flame retardant is used, a copolymer of an $\alpha$-olefin and an unsaturated carboxylic acid is preferable. Using the dispersant can improve the dispersibility of the phosphorus-based flame retardant and can reduce the content of the flame retardant.

2. Necessity of dispersant

A dispersant may not be added to the horizontal member for automobiles in the present invention. The dispersant is not always necessary to ensure the flame retardancy.

[Other agents]

The horizontal member for automobiles used in the present invention may include: various fibrous fillers of organic fibers or inorganic fibers or non-fibrous fillers; and additives such as UV-resistant agents, stabilizers, release agents, pigments, softeners, plasticizers and surfactants.

[Method for producing horizontal member for automobiles: case where resin is thermoplastic resin]

Hereinafter, a production method when the resin is a thermoplastic resin will be described. When the resin is a thermoplastic resin, the molding material in the present invention is preferably flat plate-shaped.

1. Cold press (molding) method

As a molding method for producing a horizontal member (molded body) for automobiles according to the present invention, press molding (also referred to as compression molding) is used, and particularly press molding using cold pressing is preferably used. In the cold press-molding method, for example, a molding material heated to a first predetermined temperature is put into a mold set to a second predetermined temperature, and then the molding material is pressurized and cooled.

Specifically, when the thermoplastic resin constituting the molding material is crystalline, the first predetermined temperature is equal to or higher than the melting point of the thermoplastic resin, and the second predetermined temperature is less than the melting point. The first predetermined temperature is equal to or higher than the glass transition temperature of the thermoplastic resin, and the second predetermined temperature is less than the glass transition temperature when the thermoplastic resin is amorphous.

That is, the cold press-molding method includes at least the following steps A-1) to A-2).

Step A-1) a step of heating the molding material to a temperature equal to or higher than the melting point and equal to or lower than the decomposition temperature of the thermoplastic resin when the thermoplastic resin is crystalline, and to a temperature equal to or higher than the glass transition temperature and equal to or lower than the decomposition temperature of the thermoplastic resin when the thermoplastic resin is amorphous.

Step A-2) a step of placing and pressing the molding material heated in the step A-1) in a mold with the temperature adjusted to be lower than the melting point when the thermoplastic resin is crystalline, or to be lower than the glass transition temperature when the thermoplastic resin is amorphous.

Performing these steps can complete the molding of the molding material.

It is required to perform the above steps in the above order, but another step may be included between the steps. Examples of the other step include a shaping step of pre-shaping the material into the shape of the cavity of the mold using a shaping mold different from the mold used in step A-2) prior to step A-2).

2. Hot press (molding) method

In the hot press (molding) method, for example, a molding material is charged into a mold and pressurized while the temperature of the mold is increased to a first predetermined temperature, and the mold is cooled to a second predetermined temperature. Specifically, when the thermoplastic resin constituting the molding material is crystalline, the first predetermined temperature is equal to or higher than the melting point of the thermoplastic resin, and the second predetermined temperature is less than the melting point. When the thermoplastic resin constituting the molding material is amorphous, the first predetermined temperature is equal to or higher than the glass transition temperature of the thermoplastic resin, and the second predetermined temperature is less than the glass transition temperature.

The hot press-molding method preferably includes at least the following steps B-1) to B-4).

B-1) Step of placing the molding material in a mold (on a lower mold).

B-2) A step of pressurizing while raising the temperature of the mold to a temperature equal to or higher than the melting point of the thermoplastic resin but equal to or lower than the decomposition temperature when the thermoplastic resin is crystalline, or to a temperature equal to or higher than the glass transition temperature of the thermoplastic resin and equal to or lower than the decomposition temperature when the thermoplastic resin is amorphous (first pressing step).

B-3) One or more pressing steps in which the pressure in the final step is 1.2 times of the pressure in the first pressing step or more and 100 times of the pressure in the first pressing step or less (second pressing step).

B-4) A step of adjusting the temperature of the mold to a temperature lower than a melting point when the thermoplastic resin is crystalline, or a temperature lower than a glass transition temperature when the thermoplastic resin is amorphous. Performing these steps can complete the molding of the molding material.

3. Common matter of cold press-molding method and hot press-molding method

Steps A-2) and B-3) are steps of applying pressure to the molding material to provide a molded body having a desired shape. The molding pressure in this case is not particularly limited, but is preferably as low as possible within a range in which a desired molded body shape can be obtained. Specifically, the molding pressure is preferably less than 30 MPa, more preferably 20 MPa or less, and still more preferably 10 MPa or less, with respect to the projected area of the mold cavity. The molding pressure of less than 30 MPa is preferable because capital investment or maintenance cost of the press machine is not required. As a matter of course, various steps may be inserted between the above steps during compression molding, and for example, vacuum compression molding in which compression molding is performed under vacuum may be used.

[Spring back]

Hereinafter, the spring back in the case where the resin included in the horizontal member for automobiles is a thermoplastic resin will be described below.

1. Spring back of molding material

In order to perform cold press molding using a molding material, it is necessary to preheat and heat the molding material to a predetermined temperature to soften and melt. When the thermoplastic resin is in a plastic state at the time of preheating the molding material including reinforcing fibers having a weight average fiber length of 5 mm or more and 100 mm or less (particularly, in the case of the molding material including a mat state with reinforcing fibers deposited), the preheated molding material expands due to spring back of the reinforcing fibers, and the bulk density of the molding material changes. When the bulk density changes at the time of preheating, the molding material becomes porous, a surface area increases, air flows into the molding material, and the thermal degradation of the thermoplastic resin is promoted. Herein, the spring back amount is a value obtained by dividing a plate thickness of a preheated molding material by a plate thickness of the molding material before preheating.

When a reinforcing fiber bundle included in the molding material is highly opened (single-fiber rich) or the fiber length increases, the spring back amount tends to increase.

In the present invention, the spring back amount of the molding material is preferably 1.2 or more and 8.0 or less. When the spring back amount of the molding material is 8.0 or less, the battery cover can be prevented from excessively bulging and coming into contact with the battery during combustion of the battery cover using the molding material. In contrast, when the spring back amount is 1.2 or more, the horizontal member for automobiles using the molding material is likely to expand during heating, thus providing the effect of heat insulation.

A preferable spring back amount of the molding material is 3.0 or more and 8.0 or less, a more preferable spring back amount is 4.0 or more and 7.0 or less, and a still more preferable spring back amount is 4.0 or more and 6.0 or less.

2. Spring back of horizontal member for automobiles

Like the molding material, the horizontal member (molded body) for automobiles according to the present invention preferably has a spring back amount of 1.2 or more and 8.0 or less. A preferable spring back amount of the horizontal member for automobiles is 3.0 or more and 8.0 or less, a more preferable spring back amount of the horizontal member for automobiles is 4.0 or more and 7.0 or less, and a still more preferable spring back amount is 4.0 or more and 6.0 or less. When the spring back amount of the horizontal member for automobiles is 1.2 or more, the horizontal member for automobiles is likely to swell during heating, thus easily providing the effect of heat insulation.

[Method for producing horizontal member for automobiles: case where resin is thermosetting resin]

When the resin is a thermosetting resin, the horizontal member for automobiles according to the present invention is preferably formed by molding a sheet molding compound (may be referred to as SMC) using reinforcing fibers. The sheet molding compound has high moldability, and thus can be easily molded even if the shape is complicated, for example, a battery tray or a battery cover.

That is, the sheet molding compound can be molded to produce a molded product of a fiber reinforced plastic, thereby allowing to produce a battery tray having a concavo-convex shape. The sheet molding compounds have higher fluidity and formability than continuous fibers, and ribs and bosses can be easily fabricated.

As the sheet molding compound (SMC) used in the molded product of the fiber reinforced plastic, a sheet molding compound manufactured by TEIJIN AUTOMOTIVE TECHNOLOGIES (may be abbreviated as TAT) can be used. In general, when a molded product of a fiber reinforced plastic is produced by molding a sheet molding compound, compression molding is used.

[Horizontal member for automobiles]

1. Overview

The horizontal member for automobiles according to the present invention is a horizontal member that is horizontally attached when an automobile part is formed. The entirety of the horizontal member does not necessarily need to be horizontal, and a part or most of the horizontal member may be horizontal. Examples thereof include a battery cover, a battery bottom protection cover, a roof, a hood, and a hood portion of a rear door. Improvement in the flame resistance of the horizontal member for automobiles requires sagging to be prevented during combustion.

2. Battery tray, battery cover, and battery bottom protection cover

The horizontal member for automobiles according to the present invention is preferably a component of a battery box. The component of the battery box is preferably any one of a battery tray, a battery cover, and a battery bottom protection cover.

2.1 Battery tray and battery cover

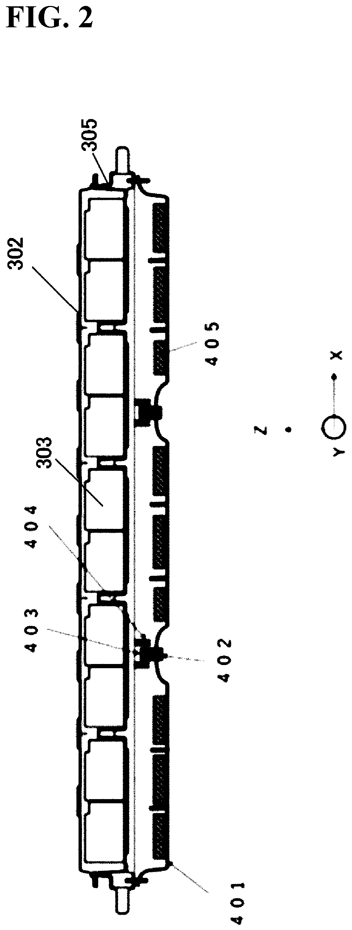

FIG. 2 is a cross-sectional view illustrating an example of a battery box. As illustrated in FIG. 2, a battery 303 is stored in a battery box including a battery tray 305 and a battery cover 302. The battery box component is preferably used for a vehicle.

2.2 Battery bottom protection cover

2.2.1
The horizontal member for automobiles according to the present invention may be a battery bottom protection cover. An example of the battery bottom protection cover is shown in FIG. 2. More specifically, it is preferable that at least one portion of the battery bottom protection cover 401 is fastened to the battery tray 305 by a fastening rod 402, and a fastening insertion hole 403 is integrally molded in the battery tray 305.

2.2.2 Insertion hole

The battery tray 305 includes an insertion base 404 protruding toward the battery bottom protection cover 401, and the insertion hole 403 is preferably disposed inside the insertion base 404.

2.2.3 Impact relaxation material

An impact relaxation material 405 is preferably disposed between the battery tray 305 and the battery bottom protection cover 401. In addition, the impact relaxation material 405 more preferably has a honeycomb structure. Providing such an impact relaxation material 405 improves the resistance of the impact from the vehicle lower portion.

2.2.4 Rectifying plate

The battery bottom protective cover preferably includes a rectifying plate by integral molding, and the rectifying plate may be provided below the battery bottom protection cover. Providing the rectifying plate decreases the air resistance, thereby improving the running stability of the vehicle.

2.2.5 Electromagnetic wave shielding layer

An electromagnetic wave shielding layer is preferably provided to the upper surface of the battery cover. In addition, the electromagnetic wave shielding layer may be provided between the battery bottom protection cover and the battery tray. In this case, the electromagnetic wave shielding layer is preferably provided on the upper surface of the battery bottom protection cover, and the impact relaxation material is more preferably disposed on the upper side of the electromagnetic wave shielding layer.

3. Thickness of horizontal member for automobiles

The thickness of the horizontal member for automobiles is preferably 1 mm or more, more preferably 3 mm or more, and still more preferably 5 mm or more.

[Tensile test before and after fire resistance performance]

The horizontal member for automobiles according to the present invention satisfies the following (a):

(a) the tensile strength retention ratio represented by a formula (1) is more than 0.03%. The tensile strength retention ratio is preferably 0.05% or more, more preferably 0.06% or more, and still more preferably 0.1% or more. In addition, the range of the tensile strength retention ratio is preferably 0.04% or more and 50% or less, more preferably 0.05% or more and 40% or less, still more preferably 0.06% or more and 30% or less, and further more preferably 1% or more and 25% or less. When the tensile strength retention ratio exceeds 0.03%, the shape of the horizontal member for automobiles can be maintained after combustion without resin dripping.

Tensile strength retention ratio (%) = (tensile strength B after combustion ÷ tensile strength A before combustion) × 100

1. Case where horizontal member for automobiles is battery cover

When the horizontal member for automobiles according to the present invention is the battery cover 302, fire resistance performance against flame from the battery 303 existing inside the battery box is required. Further, when the leaked gasoline burns in an accident, the battery cover 302 may be exposed to a flame of 700 to 800°C. Therefore, the fire resistance performance under stricter conditions is required than that of the battery cover in the related art. Therefore, the fire resistance performance becomes important toward the inside of the battery box. In this case, when the tensile strength retention ratio exceeds 0.03%, the battery cover does not causes resin drip after combustion and does not come into contact with the battery itself. In the case of the battery cover, the tensile strength retention ratio is preferably 0.05% or more, and more preferably 0.07% or more.

In addition, the stress when the battery cover is pressed from the non-contacting flame side (upper side) by the push-pull gauge is preferably 100N or more, more preferably 150N or more, and still more preferably 200N or more.

2. Case where horizontal member for automobiles is battery tray

When the horizontal member for automobiles according to the present invention is a battery tray, a fire resistance requirement for a flame from the outside of the vehicle of the battery box is required, and thus fire resistance performance toward the outside of the battery box becomes important. In the case of the battery tray, the tensile strength retention ratio is preferably 0.04% or more, more preferably 0.06% or more, and still more preferably 0.1% or more.

[Collection of test piece: residual tensile strength]

As a method for measuring the tensile strength retention ratio will be described later, ten test pieces having a width of 25 mm and a length of 150 mm are cut out from an horizontal member for automobiles. The tensile strengths of five pieces of the cut test pieces are measured, and the measurement result is regarded as the tensile strength A before the combustion test. The remaining five pieces of the test pieces are subjected to a combustion test, the tensile strengths of five pieces of the test pieces after subjected to the combustion test are measured, and the measurement result is regarded as the tensile strength B after the combustion test.

[Workload]

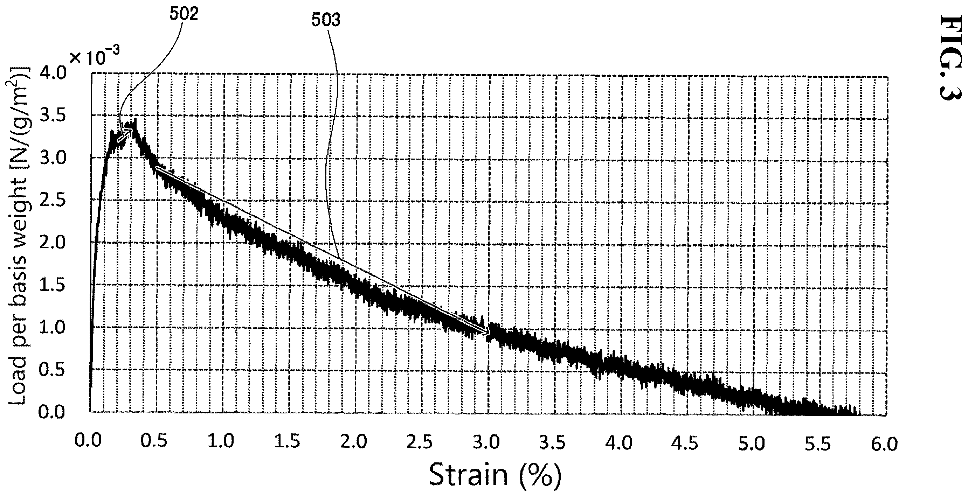

The horizontal member for automobiles according to the present invention satisfies the following (b).
(b) The workload per basis weight in the tensile test of the test piece having a width of 25 mm after subjected to the combustion test is $0.5 \times 10^{-3}$ [(N·mm)/(g/m$^2$)] or more and $100 \times 10^{-3}$ [(N·mm)/(g/m$^2$)] or less.
Herein, the workload is a value obtained by integrating the tensile force in the tensile test with a strain amount. The workload per basis weight in the tensile test is a value obtained by integrating the load per basis weight in the tensile test with the displacement value of the strain.
For example, in a load-strain [mm] curve obtained by converting the displacement ratio [unit: %] of the strain on the horizontal axis of the load-strain [%] curve in the tensile test shown in FIG. 3 into the displacement amount (unit: mm), the workload in the tensile test can be calculated by integrating the load per basis weight with the strain amount [mm].
When the workload is the lower limit value or more, the horizontal member for automobiles does not sag during combustion, and thus the resin does not drape down. In contrast, when the value is equal to or less than the upper limit value, a large pressure is not required at the time of press forming, and thus the horizontal member for automobiles can be easily formed. The workload per basis weight in the tensile test of the test piece having a preferable width of 25 mm after subjected to the combustion test is $0.5 \times 10^{-3}$ [(N·mm)/(g/m$^2$)] or more and less than $100 \times 10^{-3}$ [(N·mm)/(g/m$^2$)], more preferably $0.5 \times 10^{-3}$ [(N·mm)/(g/m$^2$)] or more and less than $50 \times 10^{-3}$ [(N·mm)/(g/m$^2$)], still more preferably $1.0 \times 10^{-3}$ [(N·mm)/(g/m$^2$)] or more and less than $30 \times 10^{-3}$ [(N·mm)/(g/m$^2$)], yet still more preferably $1.5 \times 10^{-3}$ [(N·mm)/(g/m$^2$)] or more and less than $20 \times 10^{-3}$ [(N·mm)/(g/m$^2$)], and most preferably $1.5 \times 10^{-3}$ [(N·mm)/(g/m$^2$)] or more and less than $10 \times 10^{-3}$ [(N·mm)/(g/m$^2$)].

[Average change rate of load]

1. The horizontal member for automobiles according to the present invention preferably satisfies the following (c).

(c) In the tensile test of the test piece having the width of 25 mm after subjected to the combustion test, an average change rate of a load [N/(g/m$^2$)] at a strain of 0.1% to 0.2% is in a range of $0.1 \times 10^{-3}$ [N/(g/m$^2$)] or more and less than $100 \times 10^{-3}$ [N/(g/m$^2$)]. The more preferable average change rate of the load [N/(g/m$^2$)] at the strain of 0.1% to 0.2% is in the range of $0.5 \times 10^{-3}$ [N/(g/m$^2$)] or more and $9.0 \times 10^{-3}$ [N/(g/m$^2$)] or less, the still more preferable average change rate is in the range of $1.5 \times 10^{-3}$ [N/(g/m$^2$)] or more and $8.0 \times 10^{-3}$ or less, and the even more preferable average change rate is $1.5 \times 10^{-3}$ or more and $7.0 \times 10^{-3}$ or less.

The average change rate of the load [N/(g/m$^2$)] at the strain of 0.1% to 0.2% is 0.1 $\times$ 10$^{-3}$ [N/(g/m$^2$)] or more, meaning that a certain degree of stress is required to deform the fibers. That is, the average change rate of the load [N/(g/m$^2$)] at the strain of 0.1% to 0.2% is preferably 0.1 $\times$ 10$^{-3}$ [N/(g/m$^2$)] or more, because the fibers do not sag when the horizontal member for automobiles burns. The average change rate of the load [N/(g/m$^2$)] at the strain of 0.1% to 0.2% is less than 100 $\times$ 10$^{-3}$ [N/(g/m$^2$)], meaning a material that can be easily formed without requiring a large load in the initial stage to which the load is applied. Herein, the average change rate of the load [N/(g/m$^2$)] at the strain of 0.1% to 0.2% is, for example, the slope of the arrow indicated by the symbol 502 in the load [N/(g/m$^2$)] - strain [%] curve of FIG. 3.

2. The horizontal member for automobiles according to the present invention preferably satisfies the following (d).

(d) in the tensile test of the test piece having the width of 25 mm after subjected to the combustion test, an average change rate of a load [N/(g/m$^2$)] at a strain of 0.5% to 3.0% is in a range of -1.0 $\times$ 10$^{-3}$ [N/(g/m$^2$)] or more and -0.01 $\times$ 10$^{-3}$ [N/(g/m$^2$)] or less. Herein, the average change rate of the load [N/(g/m$^2$)] at the strain of 0.5% to 3.0% is, for example, the slope of the arrow indicated by the symbol 503 in the load [N/(g/m$^2$)] - strain [%] curve of FIG. 3.

The average change rate of the load [N/(g/m$^2$)] is a negative value and falls within this range, meaning a material that can be easily formed without requiring a large load other than the initial load during molding.

[Range of strain in which load per basis weight becomes maximum]

The horizontal member for automobiles according to the present invention preferably satisfies the following (e).

(e) in the tensile test of the test piece having the width of 25 mm after subjected to the combustion test, the test piece has the maximum load value in a strain range of more than 0% and less than 2%. The maximum load value is preferably in the strain range of more than 0% and less than 1%, and more preferably in the strain range of more than 0% and less than 0.5%.

The phrase "the maximum load value is in a strain range of more than 0% and less than 2%" means that the load [N/(g/m$^2$)] - strain [%] curve obtained by a tensile test of a test piece having a width of 25 mm after a combustion test has a peak of the maximum load in a strain range of more than 0% and less than 2%. The load [N/(g/m$^2$)] - strain [%] curve preferably has a peak of maximum load in a strain range of more than 0% and less than 1%, and more preferably have a peak of maximum load in a strain range of more than 0% and less than 0.5%.

When the molding material is press-molded by the upper and lower molds, stress can be applied to the molding material immediately after closing the upper and lower molds and sandwiching the molding material. Designing so as to have the maximum load value in the above range (initial stage in which the strain becomes large) allows a molding material (horizontal member for automobiles) having the same workload to be molded more easily.

[Maximum value of load per basis weight]

The horizontal member for automobiles according to the present invention preferably satisfies the following (f).

(f) in the tensile test of the test piece having the width of 25 mm after subjected to the combustion test, the maximum load per basis weight is 1.1 $\times$ 10$^{-3}$ [N/(g/m$^2$)] or more. The maximum load per basis weight is more preferably 1.15 $\times$ 10$^{-3}$ [N/(g/m$^2$)] or more, still more preferably 1.5 $\times$ 10$^{-3}$ [N/(g/m$^2$)] or more, even more preferably 2.0 $\times$ 10$^{-3}$ [N/(g/m$^2$)] or more, and most preferably 3.0 $\times$ 10$^{-3}$ [N/(g/m$^2$)] or more.

The maximum load per basis weight is preferably 1.1 $\times$ 10$^{-3}$ [N/(g/m$^2$)] or more, because the fiber does not sag during burn of the horizontal member for automobiles. In addition, the maximum load per basis weight is set to 1.1 $\times$ 10$^{-3}$ [N/(g/m$^2$)] or more with the same workload, and a large load is applied at a specific molding stage, thereby allowing molding to be easily performed with a small load at other stages, and eliminating the necessity for continuously applying a large load at all times until the molding is completed.

On the other hand, the maximum load per basis weight is more preferably 10 $\times$ 10$^{-3}$ [N/(g/m$^2$)] or less. When the maximum load per basis weight is 10 $\times$ 10$^{-3}$ [N/(g/m$^2$)] or less with the same workload, a large load is not required when the horizontal member for automobiles is molded, and molding can be easily performed.

[Amount of air blown to reinforcing fiber after cutting]

The method for producing a horizontal member for automobiles in which the above [workload], [average load change rate], [range of strain in which load per basis weight becomes maximum value], and [maximum value of load per unit basis weight] satisfies the above (b) to (f) is not particularly limited, but the reinforcing fiber is cut, and then the compressed air is supplied using a compressor directly below the cutting device, and the amount of the compressed air can be adjusted to adjust the value of [workload], [average change rate of load to strain curve], and [maximum value of load per basis weight] of the target range.

Example

[Fabrication of molding material]

[Material]

1. Reinforcing fiber

The following two types of reinforcing fibers were prepared.

(1) Glass fiber multi-end roving

(Owens Corning Corporation: OC Paneluxe (registered trademark) 2400 Tex)

(2) Glass fiber single end roving

(Owens Corning Corporation: SE2348 roving 2000 Tex)

2. Resin

Polypropylene resin: NOVATEC (registered trademark) PP BC03C manufactured by Japan Polypropylene Corporation

3. Flame retardant

ADK STAB (registered trademark) FP2100-JC manufactured by ADEKA Corporation

[Example 1]

A thermoplastic resin obtained by adding 11 parts by mass of a flame retardant (ADK STAB FP2100-JC) to a polypropylene resin (NOVATEC PPBC03C manufactured by Japan Polypropylene Corporation) was prepared.

Under the polypropylene resin feeder, an air-permeable support continuously moving in one direction having a suction mechanism in the lower part was provided. While the air-permeable support was moved at 2 m/min, the polypropylene resin was sprayed from the feeder onto the air-permeable support, and the polypropylene resin was fixed on the air-permeable support to prepare a polypropylene resin aggregate.

A rotary cutter was provided above the air-permeable support, and single end roving of (2) was cut to a constant length of 20 mm using the rotary cutter. In this case, the compressed air was blown immediately below the rotary cutter, and the glass fibers were separated from the roll by the negative pressure generated in the air flow. The flow rate of the compressed air was 170L/min.

The cut glass fibers were spread on the polypropylene resin aggregate previously prepared on the air-permeable support and fixed to provide a glass fiber aggregate. The supply amount of glass fibers was set such that the volume fraction of glass fibers to the molding material was 40% and the average thickness of the molding material was 2.0 mm.

In cutting to a regular length of 20 mm using a rotary cutter, a composite composition composed of the polypropylene resin aggregate and the glass fiber aggregate was fabricated with a width of 600 mm and 3 m. The production rate of the composite composition was 2 m/min.

The fabricated composite composition composed of the glass fiber aggregate and the polypropylene resin aggregate was heated by a continuous impregnation apparatus, and the glass fibers were impregnated with the polypropylene resin and cooled to provide a molding material.

The fabricated molding material was cold pressed to fabricate a battery cover that is a horizontal member for automobiles, and a battery tray.

[Example 2]

Fabrication was performed in the same manner as in Example 1 except that the flow rate of compressed air was 50 L/min.

[Example 3]

Fabrication was performed in the same manner as in Example 1 except that the flow rate of compressed air was 230 L/min.

[Example 4]

Fabrication was performed in the same manner as in Example 1 except that the flow rate of compressed air was 300 L/min.

[Example 5]

A thermoplastic resin obtained by adding 11 parts by mass of a flame retardant (ADK STAB FP2100-JC) to a polypropylene resin (NOVATEC PPBC03C manufactured by Japan Polypropylene Corporation) was prepared.

Under the polypropylene resin feeder, an air-permeable support continuously moving in one direction having a suction mechanism in the lower part was provided. While the air-permeable support was moved at 2 m/min, the polypropylene resin was sprayed from the feeder onto the air-permeable support, and the polypropylene resin was fixed on the air-permeable support to prepare a polypropylene resin aggregate.

The multi-end roving of (1) was separated by slitting to a target fiber width of 1 mm using a slitting device (cut by pressing against a rubber roll).

The slit multi-end roving of (1) and the single end roving of (2) were supplied to a rotary cutter provided above the air-permeable support so as to have a volume ratio of 1:1, and cut to a constant length of 20 mm using a rotary cutter. In this case, the compressed air was blown immediately below the rotary cutter, and the glass fibers were separated from the roll by the negative pressure generated in the air flow. The flow rate of the compressed air was 170L/min.

The cut glass fibers were spread on the polypropylene resin aggregate previously prepared on the air-permeable support and fixed to provide a glass fiber aggregate. The supply amount of glass fibers was set such that the volume fraction of glass fibers to the molding material was 38% and the average thickness of the molding material was 2.0 mm.

In cutting to a regular length of 20 mm using the rotary cutter, a composite composition composed of the polypropylene resin aggregate and the glass fiber aggregate was fabricated with a width of 600 mm and 3 m. The production rate of the composite composition was 2 m/min.

The fabricated composite composition composed of the glass fiber aggregate and the polypropylene resin aggregate was heated by a continuous impregnation apparatus, and the glass fibers were impregnated with the polypropylene resin and cooled to provide a molding material.

The fabricated molding material was cold pressed to fabricate a battery cover that is a horizontal member for automobiles, and a battery tray.

[Comparative Example 1]

Fabrication was performed in the same manner as in Example 1 except that the flow rate of compressed air was 0 L/min.

[Evaluation method]

1. Tensile strength retention ratio

1.1 Ten pieces having a width of 25 mm and a length of 150 mm are cut out from a horizontal member for automobiles to obtain test pieces.

1.2 Five pieces each of the obtained test pieces are subjected to a tensile test in accordance with ASTMD 3039 (2019) in a condition of a load rate of 1 mm/min to measure the tensile strength. The average value of the five pieces is regarded as the tensile strength A before the combustion test.

1. 3 Combustion test

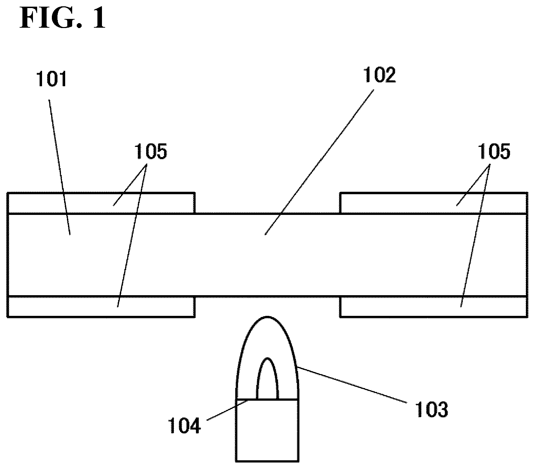

Five pieces each of the remaining test pieces are subjected to a combustion test. As shown in FIG. 1, both ends of the test piece 101 are sandwiched by an aluminum plate 105 at an interval of 40 mm in the length direction, and the resin in a region (combustion region 102) of 40 mm in the length direction of the central portion of the test piece 101 is directly burned with a flame 103 of a gas burner at 1000°C. A burner port 104 is burnt away from the test piece 101 by 60 mm. There is a possibility that the temperature or time until the resin in the combustion region 102 is completely combusted varies depending on the test piece, and thus the back surface temperature is measured using a non-contact thermometer (AD-5611A, manufactured by A&D Company, Limited) at a position 30 cm away from the back surface on the side (upper side in FIG. 1) opposite to the flame 103 of the gas burner in the central portion of the test piece 101, and the test piece 101 is combusted for 5 minutes after confirming that the back surface temperature becomes 350°C or more. After the flame 103 of the gas burner is extinguished after 5 minutes of combustion, when the flame ignited on the test piece 101 is not extinguished, it is to wait until the flame is completely digested, without actively extinguishing the flame.

Depending on the type of the resin, the resin in the combustion region 102 may not be completely burned off under the above conditions. In this case, additional heating may be performed.

1. 4 Five test pieces after subjected to the combustion test are subjected to a tensile test in accordance with ASTMD 3039 (2019) in a condition of a load rate of 2 mm/min to measure the tensile strength. The average value of the five pieces is defined as the tensile strength B after the combustion test.

1. 5 From the tensile strength A before the combustion test and the tensile strength B after subjected to the combustion test, the tensile strength retention ratio is calculated using formula (1).

2. Workload and average change rate after initial load

2. 1 Six test pieces having a width of 25 mm and a length of 150 mm are cut out from the horizontal member for automobiles.

2. 2 The test pieces are combusted under the same conditions as the "1.3 Combustion test" of the "1. Tensile strength retention ratio".

2. 3 According to the A method (strip method) of JIS L 1096: 2010 8.14.1a), six pieces each of the test pieces after combustion are extended at a grip interval of 100 mm at a tensile speed of 1 mm/min using a constant-rate-of-extension type tensile testing machine. The load in the tensile test is integrated by the strain amount [mm] to calculate each of the workload, and the average value of the six pieces of test pieces is obtained. In addition, an average change rate at a strain of 0.1% to 0.2% is calculated by dividing a difference obtained by subtracting a load at a strain of 0.1% from a load at a strain of 0.2% by 0.001, and an average value of the six pieces of test pieces is obtained. In addition, an average change rate at a strain of 0.5% to 3.0% is calculated by dividing a difference obtained by subtracting a load at a strain of 3.0% from a load at a strain of 0.5% by 0.025, and an average value of the six pieces of test pieces is obtained.

3. Spring back amount

The molding material is cut into 100 mm × 100 mm and two pieces thereof are overlapped, a thermocouple is inserted in a central portion of a mating surface, the pieces are charged into a preheating furnace heated to a heater temperature of 280°C, heating is performed until a thermocouple temperature reaches 275°C. When the thermocouple temperature reaches 210°C, the pieces are taken out from the furnace, cooled and solidified, and a preheated thickness is measured. A ratio of a thickness after preheating to a thickness before preheating is calculated as a spring back amount.

Spring back amount = thickness after preheating (mm)/thickness before preheating (mm)

4. Moldability

The flat plate-shaped molding material is cut into a length of 205 mm × a width of 95 mm, two sheets are laminated so as to have a thickness of 2 mm, dried in a hot air dryer at 120°C for 4 hours, and then heated to 240°C by an infrared heater. Then, a molding die having a flat plate shape is prepared and set to 60°C, and the cut and heated molding material is disposed so as to be positioned over the opening as it is laminated on the molding die, and the molding die is closed by clamping using a mechanical servo press (ZENFormer (registered trademark) MPS4200 manufactured by HODEN SEIMITSU KAKO KENKYUSHO CO.,LTD.). The thickness of the obtained molded body is observed, and the moldability is evaluated by comparing with the thickness of the molding material to determine an extent of reduction.

    Perfect: Reduction ratio of sheet thickness of 30% or more
    Excellent: Reduction ratio of sheet thickness of 20% or more and less than 30%
    Better: Reduction ratio of sheet thickness of 10% or more and less than 20%
    Good: Reduction ratio of sheet thickness of 5% or more and less than 10%
    Bad: Reduction ratio of sheet thickness of less than 5%

5. Heat Insulation

Ten test pieces having a width of 300 mm and a length of 300 mm are cut out from the horizontal member for automobiles. The test piece is placed on a test bench on a frame on which a 300 mm square can be placed, and the central portion of the test piece is directly burned with a flame of a burner at 1000°C. A burner port is separated from the test piece by 60 mm and combusted for 3 minutes, and a back surface temperature of the center portion of the test piece opposite to the burner flame is measured at 30 cm away from the test piece using a non-contact thermometer (AD-5611A, manufactured by A&D Company, Limited).

    Excellent: The back temperature during measurement is 200°C or less for 3 minutes from the start of combustion.

Very Good: The back temperature exceeds 200°C for more than 70 seconds and less than 3 minutes from the start of combustion.

Good: The back surface temperature exceeds 200°C for more than 10 seconds to 70 seconds from the start of combustion.

Unacceptable: The back temperature exceeds 200°C within 10 seconds from the start of combustion.

Table 2 shows the evaluation results.

[Table 1]

| Material | Example 1 | Example 2 | Example 3 | Example 4 | Example 5 | Comparative Example 1 |
|---|---|---|---|---|---|---|
| Fiber | GF | GF | GF | GF | GF | GF |
| Multi-end roving | OC Pane-luxe 2400Tex | OC Pane-luxe 2400Tex | OC Pane-luxe 2400Tex | OC Pane-luxe 2400Tex | OC Pane-luxe 2400Tex | OC Paneluxe 2400Tex |
| Single end roving | - | - | - | - | SE2348 roving 2000Tex | - |
| Air flow rate [L/min] | 170 | 50 | 230 | 300 | 170 | 0 |
| Vf [%] | 40 | 40 | 40 | 40 | 38 | 40 |
| Resin | PP | PP | PP | PP | PP | PP |
| Type of flame retardant | ADK STAB FP2100-J C | ADK STAB FP2100-J C | ADK STAB FP2100-J C | ADK STAB FP2100-J C | ADK STAB FP2100-J C | ADK STAB FP2100-J C |
| Amount of flame retardant added to resin | 11 parts by mass | 11 parts by mass | 11 parts by mass | 11 parts by mass | 11 parts by mass | 11 parts by mass |

[Table 2]

| Evaluation | Example 1 | Example 2 | Example 3 | Example 4 | Example 5 | Comparative Example 1 |
|---|---|---|---|---|---|---|
| Tensile strength retention ratio | 0.056% | 0.040% | 0.800% | 1.500% | 6.300% | 0.030% |
| Workload [(N·mm)/(g/m$^2$)] $\times$ | 2.4 | 1.2 | 4.4 | 7.5 | 8.3 | 0.4 |
| Load when strain is 0.1% [(N)/(g/m$^2$)] $\times 10^{-3}$ | 1.94 | 0.80 | 1.96 | 1.99 | 2.02 | Unmeasurable |
| Load when strain is 0.2% [(N)/(g/m$^2$)] $\times 10^{-3}$ | 2.33 | 1.30 | 2.22 | 2.10 | 1.98 | Unmeasurable |
| Average change rate of load [(N)/(g/m$^2$)] $\times 10^{-3}$ at strain of 0.1% to 0.2% | 3.90 | 5.00 | 2.60 | 1.10 | -0.40 | Unmeasurable |
| Load when strain is 0.5% [(N)/(g/m$^2$)] $\times 10^{-3}$ | 2.19 | 1.10 | 2.15 | 2.11 | 2.08 | Unmeasurable |
| Load when strain is 3% [(N)/(g/m$^2$)] $\times 10^{-3}$ | 0.80 | 0.60 | 1.20 | 1.40 | 1.58 | Unmeasurable |

(continued)

| Evaluation | Example 1 | Example 2 | Example 3 | Example 4 | Example 5 | Comparative Example 1 |
|---|---|---|---|---|---|---|
| Average change rate of load [(N)/(g/m$^2$)] $\times$ 10$^{-3}$ at strain of 0.5% to3% | -0.56 | -0.20 | -0.38 | -0.28 | -0.20 | Unmeasurable |
| Maximum load (N)/(g/m$^2$)] $\times$ 10$^{-3}$ | 2.65 | 2.80 | 2.50 | 2.40 | 2.32 | Unmeasurable |
| Strain at maximum load peak [%] | 0.34 | 0.20 | 0.30 | 0.34 | 0.33 | Unmeasurable |
| Spring back amount | 2.5 | 2.0 | 3.0 | 3.5 | 4.0 | 1.5 |
| Moldability | Excellent | Perfect | Excellent | Better | Good | Perfect |
| Heat insulation | Very Good | Good | Very Good | Excellent | Excellent | Unacceptable |

**Claims**

1.  A horizontal member for automobiles, comprising:

    a reinforcing fiber having a weight average fiber length of 5 mm or more and 100 mm or less;
    a resin; and
    a flame retardant,
    wherein the horizontal member for automobiles contains the flame retardant in an amount of 1 part by mass or more and 50 parts by mass or less with respect to 100 parts by mass of the resin, and
    the horizontal member for automobiles satisfies the following (a) and (b):

    (a) a tensile strength retention ratio represented by formula (1) is more than 0.03%, Tensile strength retention ratio (%) = (tensile strength B after combustion ÷ tensile strength A before combustion) $\times$ 100     (1);

    and
    (b) in a tensile test of a test piece having a width of 25 mm after subjected to a combustion test, a workload per basis weight is 0.5 $\times$ 10$^{-3}$ [(N·mm)/(g/m$^2$)] or more and 100 $\times$ 10$^{-3}$ [(N·mm)/(g/m$^2$)] or less, and the maximum load per basis weight is 1.1 $\times$ 10$^{-3}$ [N/(g/m$^2$)] or more.

2.  The horizontal member for automobiles according to claim 1,
    wherein in the tensile test of the test piece having the width of 25 mm after subjected to the combustion test, the maximum load per basis weight is in a strain range of more than 0% and less than 2%.

3.  The horizontal member for automobiles according to claim 1 or 2,
    wherein the horizontal member for automobiles satisfies the following (c):
    (c) in the tensile test of the test piece having the width of 25 mm after subjected to the combustion test, an average change rate of a load [N/(g/m$^2$)] at a strain of 0.1% to 0.2% is in a range of 0.1 $\times$ 10$^{-3}$ [N/(g/m$^2$)] or more and less than 100 $\times$ 10$^{-3}$ [N/(g/m$^2$)].

4.  The horizontal member for automobiles according to claim 3,
    wherein the horizontal member for automobiles satisfies the following (d):
    (d) in the tensile test of the test piece having the width of 25 mm after subjected to the combustion test, an average change rate of a load [N/(g/m$^2$)] at a strain of 0.5% to 3% is in a range of -1.0 $\times$ 10$^{-3}$ [N/(g/m$^2$)] or more and -0.01 $\times$ 10$^{-3}$ [N/(g/m$^2$)] or less.

5.  The horizontal member for automobiles according to any one of claims 1 to 4,
    wherein the resin is a thermoplastic resin.

6. The horizontal member for automobiles according to any one of claims 1 to 5,
   wherein the resin is a polypropylene resin.

7. The horizontal member for automobiles according to any one of claims 1 to 6,
   wherein the reinforcing fiber is a glass fiber.

8. The horizontal member for automobiles according to any one of claims 1 to 7,
   wherein the horizontal member for automobiles is a battery cover or a battery bottom protection cover.

9. The horizontal member for automobiles according to any one of claims 1 to 8,
   wherein the resin is a thermoplastic resin, and a spring back rate of the horizontal member for automobiles is 1.2 or more and 8.0 or less.

10. A method for producing the horizontal member for automobiles according to any one of claims 1 to 9 comprising cold-pressing a molding material comprising a reinforcing fiber and a thermoplastic resin,
    wherein a spring back rate of the molding material is 1.2 or more and 8.0 or less.

11. The method for producing a horizontal member for automobiles according to claim 10,

    wherein the reinforcing fiber is a glass fiber, and
    the molding material is produced by mixing a glass fiber GFs of a single end roving and a glass fiber GFm of a multi-end roving at a volume ratio of GFm:GFs of 90:10 to 50:50.

# FIG. 1

101    102

105    105

104    103

# FIG. 2

FIG. 3

EP 4 715 001 A1

**FIG. 4**

## INTERNATIONAL SEARCH REPORT

| International application No. |
| --- |
| **PCT/JP2024/017687** |

**A.  CLASSIFICATION OF SUBJECT MATTER**

*C08J 5/04*(2006.01)i; *B29C 43/34*(2006.01)i; *B29C 70/42*(2006.01)i; *C08K 7/14*(2006.01)i; *C08L 23/10*(2006.01)i; *H01M 50/204*(2021.01)i; *H01M 50/222*(2021.01)i; *H01M 50/227*(2021.01)i; *H01M 50/229*(2021.01)i; *H01M 50/249*(2021.01)i

FI:   C08J5/04; B29C43/34; B29C70/42; C08K7/14; C08L23/10; H01M50/204 401F; H01M50/222; H01M50/227; H01M50/229; H01M50/249

According to International Patent Classification (IPC) or to both national classification and IPC

**B.  FIELDS SEARCHED**

Minimum documentation searched (classification system followed by classification symbols)

B29B11/16; B29B15/08-15/14; B29C43/34; B29C70/00-70/88; C08J5/04-5/10; C08J5/24; C08K3/00-13/08; C08L1/00-101/14; H01M50/20-50/298

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| A | WO 2021/215371 A1 (TEIJIN LIMITED) 28 October 2021 (2021-10-28)<br>entire text | 1-11 |
| A | JP 2016-151001 A (SEKISUI CHEMICAL CO., LTD.) 22 August 2016 (2016-08-22)<br>entire text | 1-11 |
| A | JP 2014-62189 A (MITSUBISHI JIDOSHA KOGYO KABUSHIKI KAISHA) 10 April 2014 (2014-04-10)<br>entire text | 1-11 |
| A | WO 2013/094702 A1 (TEIJIN LIMITED) 27 June 2013 (2013-06-27)<br>entire text | 1-11 |
| A | WO 2022/108330 A1 (LX HAUSYS, LTD.) 27 May 2022 (2022-05-27)<br>entire text | 1-11 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 July 2024** | **23 July 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/017687**

| Patent document cited in search report | | | Publication date (day/month/year) | Patent family member(s) | | | Publication date (day/month/year) |
|---|---|---|---|---|---|---|---|
| WO | 2021/215371 | A1 | 28 October 2021 | US | 2022/0393282 | A1 | |
| | | | | entire text | | | |
| | | | | EP | 4024588 | A1 | |
| | | | | CN | 115152084 | A | |
| JP | 2016-151001 | A | 22 August 2016 | (Family: none) | | | |
| JP | 2014-62189 | A | 10 April 2014 | (Family: none) | | | |
| WO | 2013/094702 | A1 | 27 June 2013 | US | 2014/0370245 | A1 | |
| | | | | entire text | | | |
| | | | | EP | 2796276 | A1 | |
| | | | | CN | 104010797 | A | |
| | | | | KR | 10-2014-0107304 | A | |
| WO | 2022/108330 | A1 | 27 May 2022 | US | 2023/0405968 | A1 | |
| | | | | entire text | | | |
| | | | | EP | 4250451 | A1 | |
| | | | | KR | 10-2022-0067513 | A | |
| | | | | CN | 117203835 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1149869 A
- JP S63183845 A
- WO 2022220303 A
- WO 2020071420 A
- WO 2013179891 A